# FASCICULE DE BREVET EUROPEEN

(11) **EP 3 214 564 B1**
(45) Date de publication et mention de la délivrance du brevet: **27.10.2021**
(21) Numéro de dépôt: 17158537.5
(22) Date de dépôt: 28.02.2017
(51) Int. Cl.: G06F 21/53, G06F 9/451

(54) **PROCÉDÉ D'EXÉCUTION ET DE TRAITEMENT DE DONNÉES, DISPOSITIF ET PROGRAMME D'ORDINATEUR CORRESPONDANT**
VERFAHREN ZUR AUSFÜHRUNG UND VERARBEITUNG VON DATEN, VORRICHTUNG UND ENTSPRECHENDES COMPUTERPROGRAMM
METHOD FOR RUNNING AND PROCESSING DATA, TERMINAL AND CORRESPONDING COMPUTER PROGRAM

(30) Priorité: 03.03.2016 FR 1651814
(43) Date de publication de la demande: 06.09.2017
(73) Titulaire: INGENICO GROUP, 75015 Paris (FR)
(72) Inventeur: QUENTIN, Pierre, 95880 ENGHIEN-LES-BAINS (FR)
(74) Mandataire: Vidon Brevets & Stratégie

(56) Documents cités:
- EP-A1- 2 953 047
- US-A1- 2012 284 513
- Machtelt Garrels: "Introduction to Linux. A Hands on Guide", , 6 juin 2008 (2008-06-06), pages 176-182, XP055313775, Extrait de l'Internet: URL:http://www.tldp.org/LDP/intro-linux/in tro-linux.pdf [extrait le 2016-10-25]

## Description

### 1. Domaine de l'invention

L'invention se rapporte au domaine de la sécurité de la transmission, de la réception et du traitement de données sensibles par un terminal de communication d'utilisateur. La technique proposée trouve une application naturelle dans les opérations de paiement réalisées entre un terminal de communication et un serveur. La technique proposée trouve également naturellement une application dans tout traitement de données sensibles, attaché à l'intégrité ou à la personnalité ou à l'identité d'un utilisateur d'un terminal de communication.

### 2. Art Antérieur

Les terminaux de communication, et plus particulièrement les terminaux de communication d'utilisateurs, tels que les téléphones intelligents, les tablettes, les montres connectés, les ordinateurs portables, sont omniprésents dans la vie quotidienne d'une part croissante de la population. Ces terminaux de communication sont utilisés pour un nombre grandissant de tâches, allant de la plus anodine (comme compter le nombre de pas effectués dans la journée) à la plus sensible (comme effectuer une surveillance d'un paramètre vital pour la santé, surveiller une habitation, gérer un compte en banque, effectuer un paiement).

Conscients de ces usages de leurs terminaux par les utilisateurs, les fabricants proposent depuis plusieurs années des solutions techniques de sécurisation. De telles solutions techniques de sécurisation permettent d'assurer une certaine confidentialité des données traitées et/ou échangées dans le terminal de communication. Ces solutions techniques de sécurisation passent dans leur grande majorité par la mise en œuvre d'un environnement d'exécution sécurisé et/ou un composant de confiance (également appelé *« secure element »*). Un composant de confiance est un composant électronique spécifique, présent sur la carte de circuit imprimé du terminal de communication. Il comprend au minimum un espace de stockage sécurisé qui permet d'enregistrer des clés de chiffrement, des identifiants (par exemple des identifiant de paiement, des identifiants bancaires, des identifiants de sécurité sociale, des identifiants d'assurance, etc.). Il est bien évident que ces informations ont un caractère très sensible et doivent être protégées contre les tentatives de fraudes ou d'usurpation.

A l'origine le composant de confiance offrait peu de fonctionnalité, hormis le stockage de données sensibles, Avec le temps, il est apparu que des opérations plus complexes devaient être réalisées en toute sécurité par le terminal de communication. C'est pour cette raison que le composant de confiance est couplé à (ou remplacé par) un environnement d'exécution sécurisé. Ainsi, en fonction des techniques de sécurisation employées, il se peut que le composant de confiance soit supprimé et que l'environnement d'exécution sécurisé fasse office à la fois de composant de confiance et d'environnement sécurisé : c'est dans cette optique qu'une norme définissant les caractéristiques d'un environnement d'exécution sécurisé a été définie et commence à être adoptée par l'industrie.

L'environnement d'exécution sécurisé est un environnement isolé qui fonctionne en parallèle avec le système d'exploitation du terminal de communication, assurant une sécurité d'exécution par rapport à l'environnement « riche », non sécurisé. Il offre un niveau de sécurité suffisant pour la plupart des applications. Les applications de confiance en cours d'exécution dans un environnement d'exécution sécurisé ont accès à toute la puissance du processeur et la mémoire principale du terminal de communication, alors que l'isolement du matériel protège théoriquement ceux-ci à partir d'applications installées par l'utilisateur en cours d'exécution dans le système d'exploitation principal.

On considère pour les besoins de la présente que le terminal de communication embarque un mécanisme qui dispose à la fois d'un espace de stockage sécurisé et d'un environnement d'exécution sécurisé qui manipule notamment les données de l'espace de stockage sécurisé. Pour les besoins de la présente, ce mécanisme est nommé environnement de confiance.

L'un des problèmes rencontrés par les environnements de confiance réside dans l'interface de programmation (l'API) qui est mise à disposition de l'environnement riche, qui peut, sous certaines conditions, être piratée et permettre un accès direct à toute ou partie d'une zone de mémoire vive utilisée par l'environnement de confiance. Divers types d'attaques peuvent être envisagées. Un autre problème posé par l'environnement de confiance est qu'il ne permet pas d'exécuter toutes les applications. En effet, bien que l'environnement de confiance puisse théoriquement exécuter tout type d'application, il est nécessaire d'une part que ces applications soient certifiées, ce qui pour le moment en fait une solution peut usitée : les caractéristiques des environnements de confiance sont en phases de normalisations mais les différentes implémentations de ces environnements sont relativement hétérogènes et n'assurent pas nécessairement une compatibilité de certification. Enfin, les applications récentes, du fait des multiples fonctionnalités qu'elles proposent présentent une tendance assez forte à l'embonpoint : la quantité de mémoire vive utilisée par ces applications est assez conséquente et nécessite que l'environnement de confiance puisse gérer efficacement tant le volume de mémoire nécessaire à l'exécution de l'application que la rapidité et la fluidité de celle-ci.

Il est donc nécessaire de proposer une solution fiable et peu couteuse permettant de disposer de la sécurité fournie par un environnement de confiance tout en limitant le cout de certification applicative.

Le document US 2012/284513 A1 divulgue une méthode permettant de fournir à des terminaux clients, un accès sécurisé à des applications installées sur un serveur.

Le document Machtelt Garrels: "Introduction to Linux. A Hands on Guide", 6 juin 2008 (2008-06-06), pages 176-182, XP055313775, est un manuel d'introduction du système d'exploitation Linux. Dans la section §10.4, des commandes pour exécuter des applications sur une machine linux à distance sont présentées. Le résultat (texte ou graphiques) de l'exécution d'une application peut être transmis par la machine à distance à la station d'utilisateur.

### 3. Résumé

La technique proposée résout au moins en partie les problématiques posées par les techniques antérieures. En effet, selon la technique proposée, plutôt que d'implémenter, au sein du composant de confiance, une application de traitement de données confidentielles, on implémente uniquement une application de décodage vidéo.

Cette technique présente l'avantage de ne pas induire de vulnérabilité au niveau du terminal de communication. En effet, il n'est pas possible de profiter de la relative ouverture du système d'exploitation du terminal de communication pour tenter de compromettre les données saisies ou reçues par le terminal de communication.

Plus particulièrement, il est divulgué un procédé d'exécution d'une application d'utilisateur, procédé mis en œuvre au sein d'un terminal de communication du type comprenant un environnement de confiance, ledit environnement de confiance comprenant un espace de stockage sécurisé et un module d'exécution sécurisé d'application. Un tel procédé comprend :
- une étape de réception, au sein de l'environnement de confiance, d'une instruction de lancement d'une application d'utilisateur ;
- une étape de transmission, à un serveur, d'une requête d'exécution de ladite application d'utilisateur ;
- une étape de réception, en provenance du serveur, par une application de restitution vidéo s'exécutant au sein de l'environnement de confiance, d'un flux vidéo résultant de l'exécution, sur le serveur de ladite application d'utilisateur ;
- une étape d'affichage dudit flux vidéo sur un écran dudit terminal de communication, accessible depuis ledit environnement de confiance.

Ainsi, il n'est pas possible, pour une application frauduleuse ou malveillante, qui s'exécute sur le terminal de communication, d'intercepter les données qui sont échangées avec l'application d'utilisateur. En effet, comme cette application ne s'exécute pas sur le terminal, l'application malveillante ne peut pas intervenir ou espionner le fonctionnement de l'application d'utilisateur. Au mieux, en cas d'attaque par canaux cachés, l'application malveillante pourrait obtenir une information sur la charge d'un processeur : l'application malveillante ne pourrait cependant pas tirer de conclusion de cette information, puisque la charge serait représentative de l'exécution de l'application de restitution vidéo, et non de celle de celle de l'application d'utilisateur.

Selon une caractéristique particulière, préalablement à ladite étape de transmission de ladite requête d'exécution, une étape d'établissement, par ledit environnement de confiance, avec ledit serveur, d'un canal de transmission sécurisé.

Ainsi, les échanges qui sont réalisés entre l'environnement de confiance du terminal et le serveur sont protégés par ce canal de communication sécurisé.

Selon une caractéristique particulière, , préalablement à l'étape d'affichage du flux vidéo, une étape de déchiffrement dudit flux vidéo.

Ainsi, même si le flux vidéo est intercepté par un dispositif ou un procédé frauduleux, le flux vidéo ne peut pas être affiché avant qu'il ne soit déchiffré par l'environnement de confiance.

Selon une caractéristique particulière, ladite application d'utilisateur est une application de paiement.

Selon une caractéristique particulière, ladite requête d'exécution de ladite application d'utilisateur comprend au moins une donnée d'identification d'utilisateur et au moins une donnée d'identification de ladite application d'utilisateur.

Selon un autre aspect, il est également divulgué un procédé d'exécution d'une application d'utilisateur au sein d'un serveur. Un tel procédé comprend :
- une étape de réception, en provenance d'un environnement de confiance d'un terminal de communication, d'une requête d'exécution de ladite application d'utilisateur ;
- une étape d'obtention d'au moins une donnée nécessaire à l'exécution ladite application d'utilisateur en fonction d'au moins une donnée de la requête et d'une source de données complémentaire ;
- une étape d'instanciation de ladite application d'utilisateur, déclenchant l'exécution de ladite application d'utilisateur ;
- une étape d'obtention d'un flux vidéo issu de l'exécution de ladite application d'utilisateur ;
- une étape de transmission, audit environnement de confiance dudit terminal de communication, dudit flux vidéo; un environnement de confiance étant un environnement comprenant un espace de stockage sécurisé et un module d'exécution sécurisé d'application.

Selon une caractéristique particulière, ladite étape de d'instanciation de ladite application d'utilisateur comprend :
- une étape de recherche, au sein d'une structure de données de mémorisation d'application, de ladite application d'utilisateur, ladite recherche étant basée sur au moins une donnée de ladite requête d'exécution de service ;
- une étape de chargement, au sein d'une mémoire dudit serveur, d'une machine virtuelle et une étape de lancement de ladite application d'utilisateur au sein de ladite machine virtuelle.

Ainsi l'exécution de l'application d'utilisateur est isolée du serveur lui-même. Un éventuel dysfonctionnement de l'application d'utilisateur n'est donc pas à même de perturber l'exécution du serveur qui reste indépendant de l'application d'utilisateur.

Selon un autre aspect, il est également décrit un terminal de communication du type comprenant un environnement de confiance, ledit environnement de confiance comprenant un espace de stockage sécurisé et un module d'exécution sécurisé d'application, terminal apte à exécuter, au sein dudit environnement de confiance au moins une application.

Un tel terminal comprend :
- des moyens de réception, au sein de l'environnement de confiance, d'une instruction de lancement d'une application d'utilisateur ;
- des moyens de transmission, à un serveur, d'une requête d'exécution de ladite application d'utilisateur ;
- des moyens de réception, en provenance du serveur, par une application de restitution vidéo s'exécutant au sein de l'environnement de confiance, d'un flux vidéo résultant de l'exécution, sur le serveur de ladite application d'utilisateur ;
- des moyens d'affichage dudit flux vidéo sur un écran dudit terminal de communication, accessible depuis ledit environnement de confiance.

Selon un autre aspect, il est également décrit un serveur d'exécution d'une application d'utilisateur. Un tel serveur comprend :
- des moyens de réception, en provenance d'un environnement de confiance d'un terminal de communication, d'une requête d'exécution de ladite application d'utilisateur ;
- des moyens d'obtention d'au moins une donnée nécessaire à l'exécution ladite application d'utilisateur en fonction d'au moins une donnée de la requête et d'une source de données complémentaire ;
- des moyens d'instanciation de ladite application d'utilisateur, déclenchant l'exécution de ladite application d'utilisateur ;
- des moyens d'obtention d'un flux vidéo issu de l'exécution de ladite application d'utilisateur ;
- des moyens de transmission, audit environnement de confiance dudit terminal de communication, dudit flux vidéo ; un environnement de confiance étant un environnement comprenant un espace de stockage sécurisé et un module d'exécution sécurisé d'application.

Selon une implémentation préférée, les différentes étapes des procédés selon la technique proposée sont mises en œuvre par un ou plusieurs logiciels ou programmes d'ordinateur, comprenant des instructions logicielles destinées à être exécutées par un processeur de données d'un module relais selon la technique proposée et étant conçu pour commander l'exécution des différentes étapes des procédés.

En conséquence, la technique proposée vise aussi un programme, susceptible d'être exécuté par un ordinateur ou par un processeur de données, ce programme comportant des instructions pour commander l'exécution des étapes d'un procédé tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La technique proposée vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon la technique proposée peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la technique proposée est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la technique proposée.

### 4. Figures

D'autres caractéristiques et avantages apparaîtront plus clairement à la lecture de la description suivante d'un mode de réalisation particulier de la divulgation, donné à titre de simple exemple illustratif et non limitatif, et des dessins annexés, parmi lesquels :
- la figure 1 illustre le principe général de la sécurisation selon la présente technique ;
- la figure 2 détaille les étapes mises en œuvre dans l'environnement de confiance ;
- la figure 3 explicite les étapes mises en œuvre au sein du serveur ;
- la figure 4 décrit succinctement un terminal de communication ;
- la figure 5 décrit succinctement un serveur d'exécution ;
- la figure 6 décrit l'application du procédé de transmission de données à un paiement effectué à partir du terminal de communication d'utilisateur.

### 5. Description détaillée

### 5.1. Principe général

Comme explicité précédemment, la technique proposée se rapporte à un procédé de transmission de données à afficher, procédé mis en œuvre entre un terminal de communication d'utilisateur (de type smartphone, tablette, montre connectée) avec un serveur, le serveur étant connecté au terminal de communication d'utilisateur par l'intermédiaire d'un réseau de communication. Pour mettre en œuvre la présente technique, le terminal de communication dispose d'un environnement dit de confiance. Il s'agit par exemple d'un composant sécurisé, dont la fonction est d'héberger d'une part des données dont il est nécessaire d'assurer la confidentialité et l'inviolabilité et d'autre part au moins une application.

Il a été indiqué que l'usage courant d'un tel environnement de confiance consiste à effectuer quelques traitements de sécurisation voire à exécuter une application complète, par exemple pour générer des clés de chiffrement de session à partir de clé mères ou encore pour chiffrer des données avant qu'elles ne soient transmises à des dispositifs ou des applications tierces.

Au contraire, dans la présente technique, on réalise un tout nouvel usage d'un tel environnement de confiance, qui permet de lever le doute quant à l'information reçue ou transmise au sein du terminal de communication. La technique est plus particulièrement adaptée à une mise en œuvre simplifiée d'un affichage d'informations reçues en provenance du serveur avec lequel le terminal de communication est connecté. Ainsi, le principe général de la présente consiste à effectuer un décodage vidéo des données reçues en utilisant l'environnement de confiance, au moins partiellement. Ainsi, à la différence de l'art antérieur, l'environnement de confiance n'est pas utilisé comme un dispositif transactionnel, mais comme un décodeur vidéo. L'usage qui est fait de l'environnement de confiance est différent puisque plutôt que de recevoir des données de type texte (comme par exemple des données représentatives de mots de passes, de codes, etc.), l'environnement de confiance reçoit des données de type vidéo, selon un codage vidéo adapté. Les données vidéos reçues sont au moins partiellement décodées par l'environnement de confiance et écrites en mémoire vidéo (lorsqu'elle existe) du terminal de communication afin d'être directement affichées.

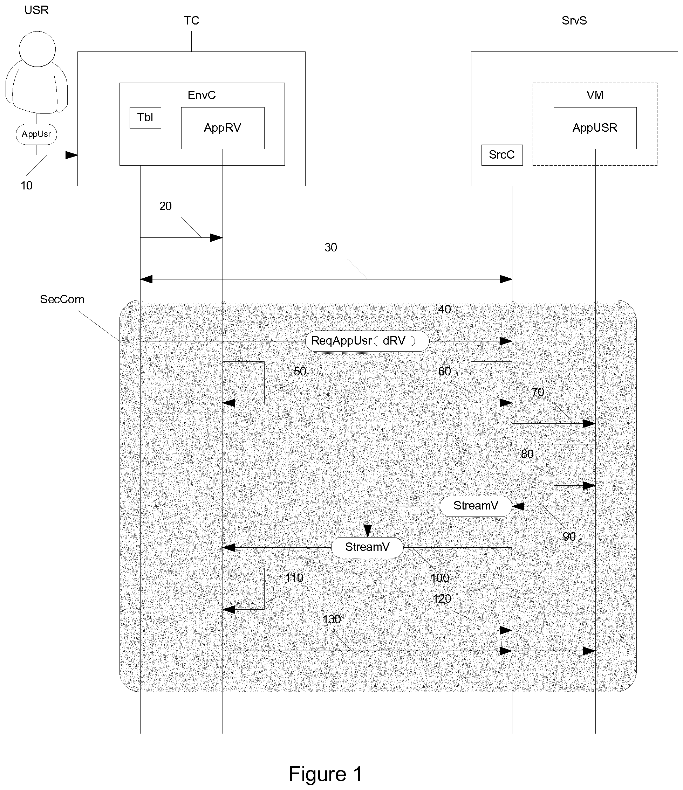

Ainsi, les données ne transitent plus (ou en tout cas pas totalement) par l'environnement non sécurisé du terminal de communication. Dès lors, une application frauduleuse, qui, comme dans l'art antérieur, tenterait d'accéder ou de modifier les données reçues ou transmises à l'environnement de confiance ne pourrait pas, avec la solution de la présente technique, le faire de manière aisée (et en règle générale, ne pourrait pas le faire du tout). On décrit plus précisément les moyens et étapes mis en œuvre dans le cadre de la présente technique en lien avec les figures 1, 2 et 3 pour lesquelles les numérotations et désignations des éléments sont communes. Le principe de fonctionnement général, décrit en relation avec la figure 1, est le suivant :
- l'utilisateur du terminal de communication (TC) souhaite accéder à un service géré par le serveur (SrvS) ;
- l'utilisateur (ou une autre application) lance (10), sur son terminal de communication, l'application de restitution vidéo (AppRV) qui permet d'accéder à ce service ; cette application de restitution vidéo (AppRV) est chargée dans l'environnement de confiance (EnvC) ; elle comprend notamment deux modules : un module de saisie (modS) et un module de restitution vidéo (modRV) ;
- l'application (AppRV) établit un canal de communication sécurisé avec le serveur et elle transmet à ce serveur, une requête d'accès à ce service ;
- concomitamment, l'application de restitution vidéo (AppRV) affiche, sur l'écran du terminal de communication, une interface d'attente (WScr) ; cette interface d'attente peut comprendre un logo, par exemple un logo d'application, permettant d'identifier quel est le service (l'application) qui est démarrée ; cela permet de ne pas avoir un effet déceptif pour l'utilisateur; le logo est obtenu par l'application de restitution vidéo, par exemple à partir de l'espace de stockage sécurisé ;
- à réception de la requête d'accès au service, le serveur (SrvS) :
   - obtient (60) des données représentatives du service à mettre en œuvre ;
   - instancie l'application AppUsr (70) (c'est-à-dire qu'il charge, dans sa mémoire, un ou plusieurs programmes qui mettent en œuvre l'application AppUsr, pour le compte du terminal) en fonction des données représentatives précédemment obtenues ;
   - le serveur extrait (90) le flux vidéo issu de l'exécution du service et transmet (100) ce flux au terminal de communication par l'intermédiaire du canal sécurisé précédemment établi ;
- l'application (AppRV) reçoit (100) le flux vidéo en provenance du serveur par l'intermédiaire du canal de transmission sécurisé et affiche (110) celui-ci.

Ainsi, la mise en œuvre de cette technique permet de limiter de manière importante les risques de vols ou d'usurpation. En effet, l'environnement de confiance, dans la présente, se contente de mettre en œuvre une application de décodage vidéo, application qui communique avec le serveur de deux manières différentes : à l'aide de la requête d'accès au service (transmise au démarrage de l'application) et à l'aide d'une interface de saisie. La requête d'accès au service permet de communiquer, au serveur, les données nécessaires. Il peut s'agir par exemple de données de configuration, propres au terminal de communication et/ou à l'utilisateur et qui sont préenregistrées dans l'environnement de confiance. L'interface de saisie permet d'interagir avec l'application exécutée sur le serveur en fonction de la vidéo transmis par le serveur.

Il est essentiel de comprendre que le serveur agit *en lieu et place du terminal.* Cela signifie que le serveur exécute une application qui, avec les techniques de l'art antérieur, aurait été exécutée sur le terminal. Par exemple, en supposant que l'utilisateur souhaite exécuter une application *AppUsr* (par exemple de consultation de dossier médical). Avec les techniques antérieures, l'application *AppUsr* est exécutée directement par le terminal de communication, et quand cela est possible au moins en partie en utilisant l'environnement de confiance. Avec la présente technique, l'application *AppUsr* est exécutée, par exemple dans une machine virtuelle (VM), sur le serveur. Le serveur est seul en charge de l'exécution de l'application *AppUsr.* De son côté, le terminal exécute une application de restitution vidéo *AppRV dans l'environnement de confiance, afin de garantir la validité de la vidéo affichée.* L'application *AppRV,* en tant que telle, est inoffensive : elle ne manipule pas de données secrètes, elle n'effectue pas de traitement sensible. L'application de restitution vidéo *AppRV* se contente de recevoir un flux vidéo de la part du serveur et de transmettre des données représentatives de touches de clavier saisies par l'utilisateur. Dès lors, il est très complexe pour un attaquant, de tenter d'obtenir des données confidentielles ou secrètes à partir d'une telle application *AppRV,* puisqu'elle n'en contient pas et n'en gère pas.

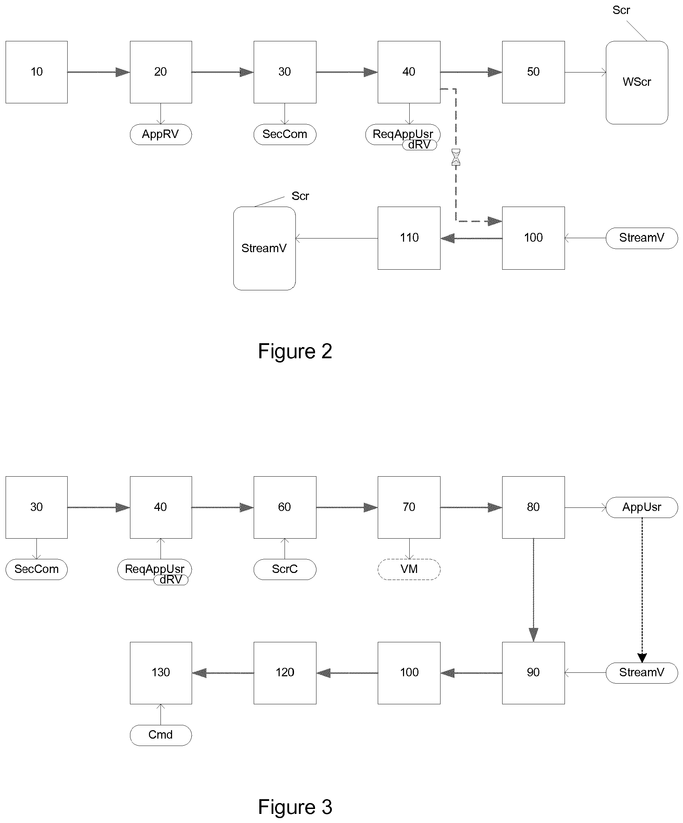

On décrit, en relation avec la figure 2, les étapes mises en œuvre à partir du terminal de communication :
- l'application de restitution vidéo *AppRV* est lancée (20) au sein de l'environnement de confiance (EnvC) du terminal de communication (TC) ; ce lancement fait suite à la réception (10), par le terminal de communication, d'une instruction de lancement de l'application *AppUsr ;*
   ∘ l'instruction de lancement provient soit de l'utilisateur (Usr), soit d'un service tiers (non représenté) qui a requis le lancement de l'application ;
   ∘ une caractéristique importante est que, aussi bien l'utilisateur que le service tiers ont en réalité exprimé le souhait de lancer l'application *AppUsr* et non pas l'application *AppRV;* le fait que l'application *AppRV* soit lancée à la place de l'application *AppUsr* résulte des paramètres enregistrés au sein de l'environnement de confiance (EnvC) et non pas d'une volonté ou d'une connaissance explicite de l'utilisateur ou du service tiers ;
   ∘ ainsi, l'instruction de lancement est une instruction de lancement de l'application *AppUsr ;*
   ∘ l'environnement de confiance (EnvC) intercepte (21) l'instruction de lancement de l'application *AppUsr* et recherche (22), au sein d'une table (Tbl) de correspondance, une correspondance entre l'application AppUsr et une éventuelle exécution à distance ;
   ∘ lorsqu'une telle correspondance est identifiée (par exemple en obtenant un enregistrement correspondant dans la table), l'environnement de confiance (EnvC) lance (23) l'application *AppRV* avec les paramètres associés dans la table (Tbl) de correspondance ;
- l'environnement de confiance (EnvC) établit (30) un canal de communication sécurisé (SecCom) avec le serveur : ceci passe éventuellement par une négociation d'une clé de session (à partir d'un couple de clés public/privée, un couple pour le serveur et un couple pour l'environnement de confiance) servant à chiffrer les échanges entre le serveur et l'environnement de confiance (EnvC) ;
- l'environnement de confiance (EnvC) transmet (40) une requête d'exécution de service *(ReqAppUsr),* sur ce canal de communication sécurisé, au serveur; cette requête d'exécution de service *(ReqAppUsr)* comprend au moins une donnée dite de restitution vidéo (dRV) : cette donnée permet au serveur qui le reçoit de savoir vers quelle interface il doit transmettre le flux vidéo résultant de l'exécution de l'application AppUsr.
   - parmi les données de restitution vidéo on trouve notamment une ou plusieurs adresses (adresses IP, port de connexion, adresse MAC) ;
   - on peut également y trouver une résolution d'écran, permettant d'indiquer à l'application AppUsr dans quelle résolution elle doit s'afficher.
   - l'application *AppRV* se met en attente (50) d'une réception de flux vidéo en provenance du serveur : elle peut à ce titre afficher un logo se rapportant à l'application *AppUsr.*

Un avantage immédiat de cette technique est qu'elle permet d'associer plusieurs applications sensibles à une seule et même application sur le terminal d'utilisateur. En effet, plusieurs applications d'utilisateurs peuvent utiliser ce principe. Un deuxième avantage réside dans la faible maintenance nécessaire : plutôt que d'adapter plusieurs applications à des environnements de confiance disparates, il suffit d'adapter une seule application : l'application de restitution vidéo. Il en résulte deux autres avantages : d'une part un avantage économique, car on réduit les coûts de maintenance applicatifs ; et un avantage en termes de sécurité car il n'est pas nécessaire de réaliser de multiples audit de sécurité des applications d'utilisateurs. Par ailleurs, cette technique est également adaptée aux terminaux vieillissants ou disposant de faibles capacités qui restent capables d'exécuter

On décrit, en relation avec la figure 3, les étapes mises en œuvre par le serveur :
- le serveur reçoit (40), en provenance de l'environnement de confiance (EnvC) du terminal de communication, une requête d'exécution de service (ReqAppUsr) ; cette requête peut avantageusement être précédée d'un établissement (30) d'un canal de communication sécurisé (SecCom) entre le terminal de communication et le serveur ;
- à partir de cette requête, le serveur obtient (60) les données nécessaires à l'exécution du service ; ces données proviennent en premier lieu de la requête (ReqAppUsr) reçue de la part de l'environnement de confiance (EnvC) et de sources de données complémentaires (SrcC) (bases de données ou autre serveur disposant de données connexes pour la mise en œuvre du service) ; cet aspect est détaillé ci-après ;
- le serveur charge (70) l'application AppUSR en mémoire, soit directement, soit par l'intermédiaire d'une machine virtuelle (VM) en utilisant les données précédemment obtenues ;
- l'application AppUSR s'exécute (80) ;
- le serveur capture (90) la sortie vidéo de l'application AppUSR et obtient un flux vidéo (StreamV) ;
- le serveur transmet (100) le flux vidéo à l'application AppRV par l'intermédiaire du canal sécurisé (SecCom) ;
- le serveur se met en attente (120) de commandes reçues sous la forme de messages de la part de l'application AppRV, commande qu'il retransmet à l'application AppUSR.
- à réception (130) d'une commande (Cmd), l'application AppUSR modifie son comportement pour répondre à la demande de l'utilisateur, simulant ainsi l'exécution de l'application AppUSR sur le terminal de communication.

Ainsi, le serveur joue en quelque sorte le rôle de « proxy » : entre le terminal de communication sur lequel s'exécute, dans l'environnement de confiance, l'application de restitution vidéo AppRV ; et entre l'application AppUSR, s'exécutant elle-même sur le serveur, donc à l'abri des tentatives d'attaque ou des intrusions menées sur le terminal de communication.

Comme indiqué, il est nécessaire de disposer de données pour l'exécution du service ; ces données sont de plusieurs types.

D'une part, il faut disposer de l'application d'utilisateur qui doit être exécutée. Il est difficilement envisageable que cette application soit transmise par le terminal de communication d'utilisateur : cette application est donc accessible, par le serveur, dans la source de données complémentaires (SrcC). Plus particulièrement, la source de données complémentaires comprend un dépôt d'applications. Ce dépôt est géré directement depuis le serveur. En d'autres termes, le serveur a la charge de la gestion et de la mise à jour des applications. Pour ce faire, le serveur se connecte par exemple de manière régulière aux magasins d'applications (de type GooglePlay™, Apple Store™ ou WindowsStore™) et obtient les applications qu'il est supposé gérer. Une autre alternative consiste à émuler le fonctionnement de ces applications (afin de donner l'illusion qu'il s'agit d'applications natives) : les applications en question sont alors des applications propriétaires, développées spécifiques ment pour le serveur et qu'il n'est pas nécessaire de mettre à jour. Ces deux approches sont d'ailleurs combinables.

D'autre part, il faut disposer de données liées à l'utilisateur lui-même. Ces données sont transmises par la requête (ReqAppUsr). Il s'agit notamment de données qui sont relatives : à l'utilisateur (nom, prénom, identifiants). Ces données sont liées au service rendu par l'application d'utilisateur. Par exemple une application de type médicale pourra nécessiter un identifiant idoine. Il en est de même pour une application de paiement. D'autres données sont également transmises : il s'agit de données relatives au terminal d'utilisateur : identifiant du terminal, résolution de l'écran, etc. Enfin des données sont spécifiquement liées au couplage utilisateur/terminal. Ce sont des données qui permettent en quelque sorte d'assurer que l'utilisateur et le terminal sont autorisés à mettre en œuvre le service (i.e. à exécuter l'application d'utilisateur).

A l'aide de ces données, le serveur est en mesure d'instancier l'application AppUsr comme si elle était exécutée sur le terminal d'utilisateur. Il est ainsi possible de donner l'illusion que l'application est exécutée sur le terminal d'utilisateur alors qu'elle ne l'est pas.

Pour parfaire le sentiment d'exécution en local, tel qu'il doit être perçu par l'utilisateur, on met en œuvre une technique de codage du flux vidéo adaptée à ce traitement : le codage utilisé est un codage H264 et plus particulièrement, lorsque cela est possible, un codage SVC (scalable video coding). L'avantage de cette norme est, dans le cas présent, que très peu de données sont nécessaires lorsqu'il ne se passe rien. Cela signifie que si l'application qui est exécutée sur le serveur affiche un écran dont l'interface évolue peu, alors les données du flux vidéo résultant sont limitées, car ces données sont des données issues de la différence entre l'interface à un instant *t* et l'interface à un instant *t+1.* Or, lorsqu'entre t et t+1, l'interface ne change pas (par exemple parce que l'application d'utilisateur effectue une tâche de fond) alors les données à transmettre

### 5.2. Application à un paiement effectué à partir du terminal de communication d'utilisateur

Dans un mode de réalisation spécifique, la technique proposée est mise ne œuvre pour réaliser un paiement sécurisé, par le terminal de communication qui communique avec un serveur de paiement d'un établissement financier. A la différence de l'état de la technique, selon la technique proposée, les informations de retour pour une requête de paiement sont transmises par le serveur de paiement sous forme d'un flux vidéo. Ainsi, il est difficile pour les applications malveillants ou les virus dans le système d'exploitation d'intercepter les informations relatives au paiement. On décrit d'abord le terminal mobile et le serveur de paiement, et par la suite on détaille un procédé complet pour réaliser un paiement sécurisé avec le terminal mobile et le serveur selon un mode de réalisation de l'invention.

### 5.2.1. Terminal de communication

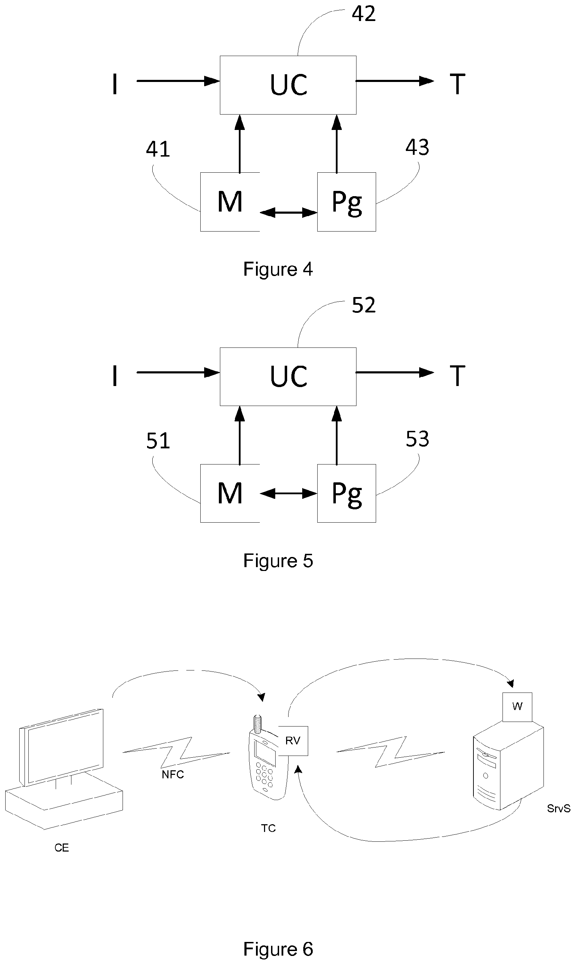

On décrit, en relation avec la figure 4, un terminal de communication de données comprenant des moyens permettant l'exécution du procédé décrit préalablement. Un tel terminal est décrit dans la cadre de la mise en œuvre d'une application de paiement, mais peut tout aussi bien être mis en œuvre dans le cas d'autres applications.

Par exemple, le terminal de communication comprend une mémoire 41 constituée d'une mémoire tampon, une unité de traitement 42, équipée par exemple d'un microprocesseur, et pilotée par le programme d'ordinateur 43, mettant en œuvre les étapes nécessaires à l'établissement d'un canal de communication sécurisé avec le serveur, à la transmission de requêtes et à la réception de flux vidéo.

À l'initialisation, les instructions de code du programme d'ordinateur 43 sont par exemple chargées dans une mémoire avant d'être exécutées par le processeur de l'unité de traitement 42. L'unité de traitement 42 reçoit en entrée par exemple une commande d'exécution d'une application d'utilisateur. Le microprocesseur de l'unité de traitement 42 met en œuvre les étapes du procédé, selon les instructions du programme d'ordinateur 43 pour permettre l'établissement d'un canal de communication sécurisé, la transmission de la requête d'exécution.

Pour cela, le dispositif de traitement comprend, outre la mémoire tampon 41, un environnement de confiance comprenant une mémoire de stockage sécurisé et un module d'exécution sécurisé, des moyens d'obtention de matériels de chiffrement, des moyens de chiffrement. Ces moyens peuvent être pilotés par le processeur de l'unité de traitement 42 en fonction du programme d'ordinateur 43.

Le terminal de communication est également muni d'au moins une interface de communication (Wi-Fi®, Bluetooth®, 3G, 4G, etc.).

Le terminal de communication est par exemple un smartphone comprenant :
- par exemple un module NFC (Near Field Communication) sécurisé;
- un clavier sécurisé ;
- un écran sécurisé ; et
- un environnement d'exécution sécurisé comprenant :
   ∘ un module de communications sécurisé qui est capable d'établir un canal de communication sécurisé avec un serveur (par exemple de paiement) ;
   ∘ un module de réception des données entrées par le clavier sécurisé et/ou le module NFC sécurisé (lorsque ce module existe) ;
   ∘ une application de décodage d'un flux vidéo connecté à destination de l'écran sécurisé (i.e. à destination d'une mémoire vidéo sécurisée).

Le module NFC sécurisé permet, d'une part, de lire les informations d'une carte de paiement munie de la fonction NFC et d'autre part, de communiquer avec les terminaux NFC des commerçants pour échanger sur des informations sur des factures à régler (notamment le montant de celles-ci). Les informations des factures à régler peuvent aussi être obtenues (en utilisant une caméra du Smartphone) en scannant des codes à deux dimensions fournis par les commerçants. Le clavier sécurisé (physique ou virtuel) permet à un utilisateur d'entrer par exemple un code d'authentification associé à sa carte de paiement. Les informations d'une carte bancaire ou les informations d'un compte bancaire peuvent aussi être saisies par l'utilisateur via le clavier sécurisé. Selon un mode de réalisation spécifique de l'invention, les informations d'une carte bancaire ou d'un compte bancaire peuvent aussi être préalablement stockées dans une mémoire sécurisée dédiée de l'environnement de confiance.

Le module NFC sécurisé (lorsqu'il existe) et le clavier sécurisé sont connectés à un module de traitement de l'environnement de confiance. Ainsi, les informations reçues par le module NFC sécurisé et/ou le clavier sécurisé ne sont pas accessibles par des applications malveillantes ou des virus dans le système d'opération.

L'environnement de confiance (par exemple un TEE) comprend une zone sécurisée du processeur du terminal. Il assure la confidentialité et l'intégralité des codes (modules logiciels) exécutés et des données utilisées au sein de l'environnement. Le module de communication sécurisé exécuté dans l'environnement de confiance est capable d'établir un canal de communication sécurisé avec un serveur de paiement d'un établissement financier. Lorsque l'utilisateur décide de régler un achat auprès d'un commerçant et reçu par un module de réception, une requête de paiement est générée (dans l'environnement de confiance) selon les données de paiement (montant à payer, numéro du compte du commerçant, identifiant de facture) et des données de la carte bancaire ou du compte bancaire de l'utilisateur, et transmises au serveur de paiement vis le canal de communications sécurisé établi par le module de communications sécurisé.

En réponse à la requête de paiement, le serveur de paiement transmet un flux vidéo via le canal de communications sécurisé. Ce flux vidéo peut être chiffré par le serveur de paiement. Le décodeur de l'environnement de confiance décode le flux vidéo et l'affiche sur l'écran sécurisé pour l'utilisateur. Les contenus du flux vidéo peuvent être une confirmation du paiement (montant et compte débité, bénéficiaire etc.), un refus du paiement (montant à débiter, compte du débiteur et bénéficiaire, motifs de refus), ou une demande des informations supplémentaires (mot de passe, code d'authentification). L'utilisateur peut suivre les instructions affichées sur l'écran sécurisé (saisir le mot de passe par exemple) afin de finaliser la procédure de paiement. Il convient de noter que le flux vidéo est décodé dans l'environnement de confiance et affiché directement sur l'écran sécurisé. Il est ainsi difficile pour les applications malveillantes ou virus dans le système d'exploitation « ouvert » d'accéder au flux vidéo. Par ailleurs, à la différence des messages en texte de l'état de la technique, les informations dans un flux vidéo sont beaucoup plus difficiles à être interceptées (et interprétées) par les applications malveillantes et les virus. En effet, l'analyse et l'extrait des informations dans un flux vidéo nécessitent des traitements compliqués et coûteux en terme de temps et de ressources matérielles. Les ressources matérielles des terminaux de communication (plus particulièrement des smartphones) sont limitées et ne sont pas suffisantes pour exécuter ce type d'applications d'analyse. En outre, les applications malveillantes et les virus sont souvent de taille limités pour éviter d'être détectés facilement. Il est difficile d'y inclure des librairies d'analyse de vidéo qui sont volumineuses.

### 5.2.2. Serveur de paiement

On décrit, en relation avec la figure 5, un serveur de traitement, par exemple un serveur de paiement, comprenant des moyens permettant l'exécution du procédé décrit préalablement.

Par exemple, le serveur de traitement comprend une mémoire 51 constituée d'une mémoire tampon, une unité de traitement 52, équipée par exemple d'un microprocesseur, et pilotée par le programme d'ordinateur 53, mettant en œuvre les étapes nécessaires à la mise en œuvre des fonctions d'exécution de l'application d'utilisateur et de transmission d'un flux vidéo résultant de cette exécution.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple une commande d'établissement d'un canal de communication sécurisé. Le microprocesseur de l'unité de traitement 52 met en œuvre les étapes du procédé de traitement, selon les instructions du programme d'ordinateur 53 pour établir un canal de communication sécurisé avec l'environnement de confiance du terminal de communication ayant transmis la requête, et sur la base de ce canal de communication, recevoir une requête d'exécution d'une application d'utilisateur, exécuter cette application conformément aux données de la requête et transmettre, à l'environnement de confiance du terminal, le flux vidéo résultant de cette exécution..

Pour cela, le dispositif comprend, outre la mémoire tampon 51, des moyens de chiffrement, des moyens de déchiffrement, des moyens d'obtention de données d'exécution d'application et des moyens de traitement d'un flux vidéo; ces moyens peuvent avantageusement se présenter sous la forme d'un processeur ou d'un ensemble de ressources sécurisées. Le dispositif comprend également des moyens de traitement cryptographiques; ces moyens de traitement comprennent par exemple un processeur de chiffrement dédié.

Ces moyens peuvent être pilotés par le processeur de l'unité de traitement 52 en fonction du programme d'ordinateur 53.

De plus, le serveur de paiement de la technique proposée comprend un module de communications sécurisé, un module d'exécution et un module d'obtention de flux vidéo. Le module de communication sécurisé est capable d'établir des canaux de communications sécurisés avec les terminaux mobiles (e.g. Smartphone) pour effectuer les paiements. Le module d'exécution permet une application de paiement selon les requêtes de paiement transmises par les terminaux mobiles, et d'émettre des informations de retour (éventuellement par le biais d'une machine virtuelle). Le module de génération est capable d'obtenir ou de capter des flux vidéo selon les informations de retour émises par le module d'exécution pour les terminaux mobiles correspondants. Selon un mode de réalisation particulier, le module d'obtention récupère un flux vidéo de manière dynamique selon les données émises par le module d'exécution et les données supplémentaires (e.g. mot de passe, code d'authentification) émises postérieurement à la transmission de la requête de paiement par le terminal de communication. Le flux vidéo peut être chiffré et est transmis en temps réel au terminal de communication pendant toute la procédure de paiement. L'utilisateur a ainsi l'illusion que l'application de paiement est exécutée localement, sur le terminal de communication.

### 5.2.3. Procédé d'exécution d'un paiement sécurisé

On décrit ci-dessous, en relation avec la figure6, un cas d'usage de la technique précédemment décrite pour effectuer un paiement.

Lorsqu'un utilisateur se présente devant une caisse (CE) d'un magasin pour effectuer un achat, la caisse du commerçant génère une facture comprenant le nom et le numéro du compte bancaire du commerçant, et l'identifiant et le montant de la facture. L'utilisateur fait passer son smartphone (TC) muni d'un module NFC sur un dispositif NCF connecté à la caisse du commerçant afin d'effectuer le paiement (par exemple en utilisant un portefeuille électronique, application de type Wallet - W). Pour effectuer le paiement en utilisant une application de type Wallet, le Smartphone (TC) transmet une requête de paiement à un serveur de paiement d'un établissement financier, via un canal de communications sécurisé établi par le module de communications sécurisé. La requête peut comprendre des informations permettant d'identifier le commerçant et l'achat ainsi que des informations d'une carte bancaire ou d'un compte bancaire de l'utilisateur. Les informations de la carte bancaire et les informations du compte bancaire peuvent être saisies par le module NCF ou manuellement par le clavier sécurisé du Smartphone. Elles peuvent également être préalablement stockées dans une mémoire sécurisé dédié à l'environnement d'exécution sécurisé.

La mise en œuvre du Wallet (W) est réalisée par le serveur (SrvS) lui-même et non par le smartphone. Le serveur de paiement reçoit la requête de paiement et exécute le paiement à l'aide d'un module d'exécution (par exemple une machine virtuelle) en lançant l'application correspondante (W). Le module d'exécution émet des informations de retour et les transmet au module d'obtention de flux vidéo. Le module d'obtention capte le flux vidéo et le transmet au Smartphone (TC) de l'utilisateur via le canal de communication sécurisé établi entre le smartphone et le serveur de paiement. Un décodeur (RV) dans l'environnement d'exécution sécurisé du smartphone décode le flux vidéo et l'afficher à l'écran sécurisé. Les informations de retour transmises par le module d'exécution du serveur de paiement peuvent concerner plusieurs types d'informations :
- un premier type d'informations est relatif à une confirmation d'un paiement exécuté avec succès ;
- un deuxième type d'informations est relative à une demande d'informations supplémentaires (saisie d'identifiant ou de code d'authentification par exemple) ;
- un troisième type d'information est relative à un refus de paiement.

Le flux vidéo qui est obtenu en sortie du module d'exécution du serveur résulte directement de l'exécution d'une instance de l'application sur le serveur. Le flux vidéo est donc fonction des données complémentaires éventuellement saisies par l'utilisateur au cours de l'affichage de la vidéo. Chaque fois que l'utilisateur entre un nouveau caractère, le module de communication du smartphone transmet le caractère saisi au serveur de paiement. Ainsi par exemple, lorsque le module d'exécution reçoit un premier caractère (un code d'authentification consitutué de quatre caractères), l'application modifie son affichage et donc le flux vidéo transmis au smartphone est modifié. Ainsi, le flux vidéo est interactif et permet informer l'utilisateur de l'avancement de l'exécution du paiement en temps réel.

Plusieurs autres cas d'usage pourraient être décrits, notamment celui consistant à effectuer un paiement d'un achat réalisé sur un magasin en ligne, à partir d'un terminal de communication. Un tel achat nécessiterai également la mise ne œuvre d'une application sur le serveur de paiement. Cette application pourrait être un navigateur Web, exécuté au sein du serveur de paiement.

## Revendications

1. Procédé d'exécution d'une application d'utilisateur, procédé mis en œuvre au sein d'un terminal de communication du type comprenant un environnement de confiance, ledit environnement de confiance comprenant un espace de stockage sécurisé et un module d'exécution sécurisé d'application, ledit procédé comprenant :
- une étape de réception (10), au sein de l'environnement de confiance (EnvC), d'une instruction de lancement d'une application d'utilisateur (AppUsr) ;
- une étape de transmission (40), à un serveur, d'une requête d'exécution de ladite application d'utilisateur (AppUsr) ;
- une étape de réception (100), en provenance du serveur, par une application de restitution vidéo (AppRV) s'exécutant au sein de l'environnement de confiance (EnvC), d'un flux vidéo (StreamV) résultant de l'exécution, sur le serveur de ladite application d'utilisateur (AppUsr) ;
- une étape d'affichage (110) dudit flux vidéo (StreamV) sur un écran dudit terminal de communication, accessible depuis ledit environnement de confiance.

2. Procédé d'exécution selon la revendication 1, comprenant, préalablement à ladite étape de transmission (40) de ladite requête d'exécution, une étape d'établissement (30), par ledit environnement de confiance, avec ledit serveur, d'un canal de transmission sécurisé (SecCom).

3. Procédé d'exécution selon la revendication 1, comprenant, préalablement à l'étape d'affichage du flux vidéo, une étape de déchiffrement dudit flux vidéo.

4. Procédé d'exécution selon la revendication 1, dans lequel ladite application d'utilisateur est une application de paiement.

5. Procédé d'exécution selon la revendication 1, dans lequel ladite requête d'exécution (ReqAppUsr) d'exécution de ladite application d'utilisateur (AppUsr) comprend au moins une donnée d'identification d'utilisateur et au moins une donnée d'identification de ladite application d'utilisateur.

6. Procédé d'exécution d'une application d'utilisateur (AppUsr) au sein d'un serveur, ledit procédé comprenant :
- une étape de réception, en provenance d'un environnement de confiance d'un terminal de communication, d'une requête (ReqAppUsr) d'exécution de ladite application d'utilisateur (AppUsr) ;
- une étape d'obtention d'au moins une donnée nécessaire à l'exécution ladite application d'utilisateur (AppUsr) en fonction d'au moins une donnée de la requête (ReqAppUsr) et d'une source de données complémentaire (SrcC) ;
- une étape d'instanciation de ladite application d'utilisateur, déclenchant l'exécution de ladite application d'utilisateur ;
- une étape d'obtention d'un flux vidéo (StreamV) issu de l'exécution de ladite application d'utilisateur ;
- une étape de transmission, audit environnement de confiance dudit terminal de communication, dudit flux vidéo (StreamV) ; un environnement de confiance étant un environnement comprenant un espace de stockage sécurisé et un module d'exécution sécurisé d'application.

7. Procédé de traitement selon la revendication 6, dans lequel ladite étape d'instanciation de ladite application d'utilisateur comprend :
- une étape de recherche, au sein d'une structure de données de mémorisation d'application, de ladite application d'utilisateur (AppUsr), ladite recherche étant basée sur au moins une donnée de ladite requête d'exécution de service *(ReqAppUsr);*
- une étape de chargement, au sein d'une mémoire dudit serveur, d'une machine virtuelle et une étape de lancement de ladite application d'utilisateur (AppUsr) au sein de ladite machine virtuelle.

8. Terminal de communication du type comprenant un environnement de confiance, ledit environnement de confiance comprenant un espace de stockage sécurisé et un module d'exécution sécurisé d'application, terminal apte à exécuter, au sein dudit environnement de confiance au moins une application, ledit terminal comprenant en outre :
- des moyens de réception, au sein de l'environnement de confiance (EnvC), d'une instruction de lancement d'une application d'utilisateur (AppUsr) ;
- des moyens de transmission, à un serveur, d'une requête d'exécution de ladite application d'utilisateur (AppUsr) ;
- des moyens de réception, en provenance du serveur, par une application de restitution vidéo (AppRV) s'exécutant au sein de l'environnement de confiance (EnvC), d'un flux vidéo (StreamV) résultant de l'exécution, sur le serveur de ladite application d'utilisateur (AppUsr) ;
- des moyens d'affichage dudit flux vidéo (StreamV) sur un écran dudit terminal de communication, accessible depuis ledit environnement de confiance.

9. Serveur d'exécution d'une application d'utilisateur (AppUsr) comprenant:
- des moyens de réception, en provenance d'un environnement de confiance d'un terminal de communication, d'une requête (ReqAppUsr) d'exécution de ladite application d'utilisateur (AppUsr) ;
- des moyens d'obtention d'au moins une donnée nécessaire à l'exécution ladite application d'utilisateur (AppUsr) en fonction d'au moins une donnée de la requête (ReqAppUsr) et d'une source de données complémentaire (SrcC) ;
- des moyens d'instanciation de ladite application d'utilisateur, déclenchant l'exécution de ladite application d'utilisateur ;
- des moyens d'obtention d'un flux vidéo (StreamV) issu de l'exécution de ladite application d'utilisateur ;
- des moyens de transmission, audit environnement de confiance dudit terminal de communication, dudit flux vidéo (StreamV) ; un environnement de confiance étant un environnement comprenant un espace de stockage sécurisé et un module d'exécution sécurisé d'application.

10. Produit programme d'ordinateur téléchargeable depuis un réseau de communication et/ou stocké sur un support lisible par ordinateur comprenant des instructions qui, lorsque le programme est exécuté par un ordinateur, conduisent celui-ci à mettre en œuvre les étapes du procédé selon la revendication 1.

## Patentansprüche

1. Verfahren zum Ausführen einer Benutzeranwendung, Verfahren, das in einem Kommunikationsendgerät des Typs, umfassend eine vertrauenswürdige Umgebung, umgesetzt wird, wobei die vertrauenswürdige Umgebung einen gesicherten Speicherplatz und ein gesichertes Ausführungsmodul für die Anwendung aufweist, wobei das Verfahren aufweist:
- einen Schritt des Empfangens (10) innerhalb der vertrauenswürdigen Umgebung (EnvC) einer Anweisung zum Starten einer Benutzeranwendung (AppUsr),
- einen Schritt des Übertragens (40) einer Anfrage zum Ausführen der Benutzeranwendung (AppUsr) an einen Server,
- einen Schritt des Empfangens (100) von dem Server durch eine Videowiedergabeanwendung (AppRV), die in der vertrauenswürdigen Umgebung (EnvC) ausgeführt wird, eines Videostroms (StreamV), der sich aus der Ausführung der Benutzeranwendung (AppUsr) auf dem Server ergibt,
- einen Schritt des Anzeigens (110) des Videostroms (StreamV) auf einem Bildschirm des Kommunikationsendgeräts, der von der vertrauenswürdigen Umgebung aus zugänglich ist.

2. Verfahren zum Ausführen nach Anspruch 1, umfassend einen Schritt des Erstellens eines gesicherten Übertragungskanals (SecCom) mit dem Server durch die vertrauenswürdige Umgebung (30) vor dem Schritt des Übertragens (40) der Anfrage zum Ausführen.

3. Verfahren zum Ausführen nach Anspruch 1, umfassend einen Schritt des Entschlüsselns des Videostroms vor dem Schritt des Anzeigens des Videostroms.

4. Verfahren zum Ausführen nach Anspruch 1, wobei die Benutzeranwendung eine Zahlungsanwendung ist.

5. Verfahren zum Ausführen nach Anspruch 1, wobei die Anfrage zum Ausführen (ReqAppUsr) der Benutzeranwendung (AppUsr) mindestens eine Dateneinheit zur Benutzeridentifikation und mindestens eine Dateneinheit zur Identifikation der Benutzeranwendung aufweist.

6. Verfahren zum Ausführen einer Benutzeranwendung (AppUsr) innerhalb eines Servers, wobei
- das Verfahren einen Schritt des Empfangens einer Anfrage (ReqAppUsr) zum Ausführen der Benutzeranwendung (AppUsr) von einer vertrauenswürdigen Umgebung eines Kommunikationsendgeräts,
- einen Schritt des Erhaltens von mindestens einer Dateneinheit, die zum Ausführen der Benutzeranwendung (AppUsr) notwendig ist, in Abhängigkeit von mindestens einer Dateneinheit der Anfrage (ReqAppUsr) und von einer ergänzenden Datenquelle (SrcC),
- einen Schritt des Instanziierens der Benutzeranwendung, der das Ausführen der Benutzeranwendung auslöst,
- einen Schritt des Erhaltens eines Videostroms (StreamV), der aus dem Ausführen der Benutzeranwendung hervorgegangen ist,
- einen Schritt des Übertragens des Videostroms (StreamV) an die vertrauenswürdige Umgebung des Kommunikationsendgeräts aufweist, wobei eine vertrauenswürdige Umgebung eine Umgebung ist, die einen gesicherten Speicherplatz und ein gesichertes Ausführungsmodul für die Anwendung aufweist.

7. Verfahren zum Verarbeiten nach Anspruch 6, wobei der Schritt des Instanziierens der Benutzeranwendung aufweist:
- einen Schritt des Suchens der Benutzeranwendung (AppUsr) innerhalb einer Struktur der Anwendungsspeicherdaten, wobei das Suchen auf mindestens einer Dateneinheit der Anfrage zum Ausführen der Dienstleistung (ReqAppUsr) basiert,
- einen Schritt des Ladens einer virtuellen Maschine innerhalb eines Speichers des Servers und einen Schritt des Startens der Benutzeranwendung (AppUsr) innerhalb der virtuellen Maschine.

8. Kommunikationsendgerät des Typs, umfassend eine vertrauenswürdige Umgebung, wobei die vertrauenswürdige Umgebung einen gesicherten Speicherplatz und ein gesichertes Ausführungsmodul für die Anwendung aufweist, wobei das Endgerät geeignet ist, innerhalb der vertrauenswürdigen Umgebung mindestens eine Anwendung auszuführen, wobei das Endgerät ferner aufweist:
- Mittel zum Empfangen innerhalb der vertrauenswürdigen Umgebung (EnvC) einer Anweisung zum Starten einer Benutzeranwendung (AppUsr),
- Mittel zum Übertragen einer Anfrage zum Ausführen der Benutzeranwendung (AppUsr) an einen Server,
- Mittel zum Empfangen von dem Server durch eine Videowiedergabeanwendung (AppRV), die innerhalb der vertrauenswürdigen Umgebung (EnvC) ausgeführt wird, eines Videostroms (StreamV), der sich aus der Ausführung der Benutzeranwendung (AppUsr) auf dem Server ergibt,
- Mittel zum Anzeigen des Videostroms (StreamV) auf einem Bildschirm des Kommunikationsendgeräts, der von der vertrauenswürdigen Umgebung aus zugänglich ist.

9. Server zum Ausführen einer Benutzeranwendung (AppUsr), umfassend:
- Mittel zum Empfangen einer Anfrage (ReqAppUsr) zum Ausführen der Benutzeranwendung (AppUsr) von einer vertrauenswürdigen Umgebung eines Kommunikationsendgeräts,
- Mittel zum Erhalten von mindestens einer Dateneinheit, die zum Ausführen der Benutzeranwendung (AppUsr) notwendig ist, in Abhängigkeit von mindestens einer Dateneinheit der Anfrage (ReqAppUsr) und von einer ergänzenden Datenquelle (SrcC),
- Mittel zum Instanziieren der Benutzeranwendung, die das Ausführen der Benutzeranwendung auslösen,
- Mittel zum Erhalten eines Videostroms (StreamV), der aus dem Ausführen der Benutzeranwendung hervorgegangen ist,
- Mittel zum Übertragen des Videostroms (StreamV) an die vertrauenswürdige Umgebung des Kommunikationsendgeräts, wobei eine vertrauenswürdige Umgebung eine Umgebung ist, die einen gesicherten Speicherplatz und ein gesichertes Ausführungsmodul für die Anwendung aufweist.

10. Computerprogrammprodukt, das von einem Kommunikationsnetz herunterladbar ist und/oder auf einem computerlesbaren Aufzeichnungsmedium gespeichert ist, das Anweisungen aufweist, die, wenn das Programm von einem Computer ausgeführt wird, diesen dazu bringen, die Schritte des Verfahrens nach Anspruch 1 auszuführen.

## Claims

1. Method for executing a user application, the method being implemented within a communications terminal of the type comprising a trusted environment, said trusted environment comprising a secured storage space and a secured applications execution module, the method comprising:
- a step of reception (10), within the trusted environment (EnvC), of an instruction for launching a user application (AppUsr);
- a step of transmission (40), to a server, of a request for executing said user application (AppUsr);
- a step of reception (100), from the server, by a video-rendering application (AppRV) executed within the trusted environment (EnvC), of a video stream (StreamV) resulting from the execution, on the server, of said user application (AppUsr);
- a step for displaying (110) said video stream (StreamV) on a screen of said communications terminal accessible from said trusted environment.

2. Method for executing according to claim 1, comprising prior to said step for transmitting (40) said execution request, a step for setting up (30), by said trusted environment, with said server, a secured transmission channel (SecCom).

3. Method for executing according to claim 1, comprising prior to the step for displaying the video stream, a step for decrypting said video stream.

4. Method for executing according to claim 1, in which said user application is a payment application.

5. Method for executing according to claim 1, in which said request (ReqAppUsr) for executing said user application (AppUsr) comprises at least one piece of data for identifying a user and at least one piece of data for identifying said user application.

6. Method for executing a user application (AppUsr) within a server, the method comprising:
- a step of reception, from a trusted environment of a communications terminal, of a request (ReqAppUsr) for executing said user application (AppUsr);
- a step for obtaining at least one piece of data needed for executing said user application (AppUsr) as a function of at least one piece of data of the request (ReqAppUsr) for executing said user application (AppUsr) and a source (SrcC) of complementary data;
- a step of instantiation of said user application, activating the execution of said user application;
- a step for obtaining a video stream (StreamV) coming from the execution of said user application;
- a step of transmission, to said trusted environment of said communications terminal, of said video stream (StreamV), a trusted environment being an environment comprising a secured storage space and a secured application execution module.

7. Method for processing according to claim 6, in which said step for instantiating said user application comprises:
- a step of searching, within an application storage data structure, for said user application (AppUsr), said search being based on at least one piece of data of said request for execution of service (ReqAppUsr) ;
- a step of loading, within a memory of said server, a virtual machine and a step for launching said user application (AppUsr) within said virtual machine.

8. Communications terminal of the type comprising a trusted environment, said trusted environment comprising a secured storage space and a secured applications executing module, the terminal being capable of executing at least one application within said trusted environment, said terminal further comprising:
- means for receiving, within the trusted environment (EnvC), an instruction for launching a user application (AppUsr);
- means for transmitting a request for executing said user application (AppUsr) to a server;
- means for receiving, from the server, by a video-rendering application executed within the trusted environment (EnvC), a video stream (StreamV) resulting from the execution, on the server, of said user application (AppUsr);
- means for displaying said video stream (StreamV) on a screen of said communications terminal, accessible from said trusted environment.

9. Server for the execution of a user application (AppUsr) comprising:
- means for receiving, from a trusted environment of a communications terminal, a request (ReqAppUsr) for executing said user application (AppUsr);
- means for obtaining at least one piece of data needed for executing said user application (AppUsr) as a function of at least one piece of data of the request (ReqAppUsr) and a source (SrcC) of complementary data;
- means for instantiating said user application, activating the execution of said user application;
- means for obtaining a video stream (StreamV) coming from the execution of said user application;
- means for transmitting, to said trusted environment of said communications terminal, of said video stream (StreamV), a trusted environment being an environment comprising a secured storage space and a secured application execution module.

10. Computer program product downloadable from a communications network and/or stored on a computer-readable carrier and/or executable by a microprocessor comprising instructions that, when said program is executed by a computer, lead the program to implement the method according to claim 1.
